# EUROPEAN PATENT SPECIFICATION

(11) **EP 3 308 661 B1**
(45) Date of publication and mention of the grant of the patent: **21.10.2020**
(21) Application number: 17203940.6
(22) Date of filing: 19.11.2015
(51) Int. Cl.: A24F 40/90, A24F 40/51, A24F 40/60, A24F 40/65

(54) **MODULE FOR POWERING AN ELECTRONIC SMOKING DEVICE PORTION**
MODUL ZUR VERSORGUNG EINES ELEKTRONISCHEN RAUCHVORRICHTUNGSTEILS
MODULE POUR ALIMENTER UNE PARTIE D'UN DISPOSITIF À FUMER ÉLECTRONIQUE

(43) Date of publication of application: 18.04.2018
(62) Divisional of application: 15195389.0
(73) Proprietor: Fontem Holdings 1 B.V., 1083 HN Amsterdam (NL)
(72) Inventor: Borkovec, Vaclav, 22761 Hamburg (DE)
(74) Representative: Gulde & Partner

(56) References cited:
- WO-A1-2015/127429
- WO-A1-2015/137815
- US-A1- 2013 341 218
- US-A1- 2015 224 268

## Description

### FIELD OF INVENTION

The present invention relates generally to modules for powering an electronic smoking device portion, and in particular to a module for powering an electronic cigarette.

### BACKGROUND OF THE INVENTION

An electronic smoking device, such as an electronic cigarette (e-cigarette), typically has a housing accommodating an electric power source (e.g. a single use or rechargeable battery, electrical plug, or other power source), and an electrically operable atomizer. The atomizer vaporizes or atomizes liquid supplied from a reservoir and provides vaporized or atomized liquid as an aerosol. Control electronics control the activation of the atomizer. In some electronic cigarettes, an airflow sensor is provided within the electronic smoking device, which detects a user puffing on the device (e.g., by sensing an under-pressure or an air flow pattern through the device). The airflow sensor indicates or signals the puff to the control electronics to power up the device and generate vapor. In other e-cigarettes, a switch is used to power up the e-cigarette to generate a puff of vapor.

When the battery of the electronic smoking device is discharged, a mobile user may undesirably be unable to recharge the battery at any location. A battery level indicator integrated with the electronic smoking device could help to avoid such situations, but typically would increase the cost of production.

Customary devices for recharging or powering electronic cigarettes are described in US 2015/224268 A1 and WO 2015/127429 A1; wherein US 2015/224268 A1 describes a module comprising the features mentioned in the preamble of the present claim 1.

### SUMMARY OF THE INVENTION

In order to overcome the drawbacks in view of the prior art the present invention provides a module for powering an electronic smoking device portion as defined in claim 1 and a corresponding method according to the present claim 13.

The module comprises a first coupling element adapted to connect to the electronic smoking device portion, a second coupling element adapted to connect to a portable electronic device, and a power supply element adapted for powering the electronic smoking device portion. The power supply element comprises an energy storage. The module is adapted to supply energy, received from the portable electronic device via the second coupling element, to the energy storage.

The characteristics, features and advantages of this invention and the manner in which they are obtained as described above, will become more apparent and be more clearly understood in connection with the following description of exemplary embodiments, which are explained with reference to the accompanying drawings.

### BRIEF DESCRIPTION OF THE DRAWINGS

In the drawings, same element numbers indicate same elements in each of the views:
Figures 1 to 2 are schematic cross-sectional illustrations of exemplary electronic smoking devices;
Figures 3 to 4 are schematic cross-sectional illustrations of modules according to exemplary embodiments of the invention;
Figure 5 is a schematic view of a system according to an exemplary embodiment of the invention, wherein the system includes a module, an electronic smoking device portion, and a portable electronic device.

### DESCRIPTION OF THE PREFERRED EMBODIMENTS

Throughout the following, an electronic smoking device, for example an e-cigarette, a module, and a system will be exemplarily described with reference to the drawings. The electronic smoking device or a portion thereof (electronic smoking device portion) may be coupled with a module according to exemplary embodiments of the invention.

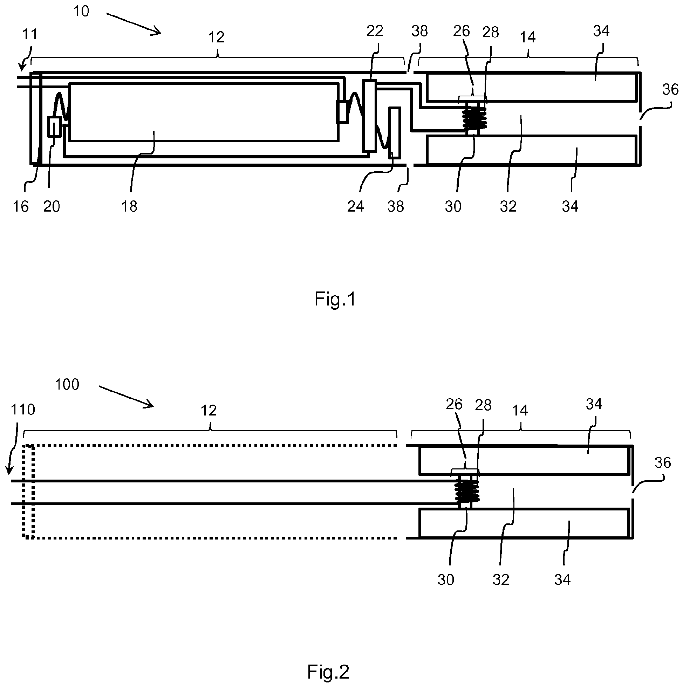

As is shown in Figure 1, an electronic smoking device 10 typically has a housing comprising a cylindrical hollow tube having an end cap 16. The cylindrical hollow tube may be a single-piece or a multiple-piece tube. In Figure 1, the cylindrical hollow tube is shown as a two-piece structure having a battery portion 12 and an atomizer/liquid reservoir portion 14. Together the battery portion 12 and the atomizer/liquid reservoir portion 14 form a cylindrical tube which can be approximately the same size and shape as a conventional cigarette, typically about 100 mm with a 7.5 mm diameter, although lengths may range from 70 to 150 or 180 mm, and diameters from 5 to 20 mm.

The battery portion 12 and atomizer/liquid reservoir portion 14 are typically made of metal, e.g. steel or aluminum, or of hardwearing plastic and act together with the end cap 16 to provide a housing to contain the components of the electronic smoking device 10. The battery portion 12 and an atomizer/liquid reservoir portion 14 may be configured to fit together by a friction push fit, a snap fit, or a bayonet attachment, magnetic fit, or screw threads. The end cap 16 is provided at the front end of the battery portion 12. The end cap 16 may be made from translucent plastic or other translucent material to allow a light-emitting diode (LED) 20 positioned near the end cap to emit light through the end cap. The end cap can be made of metal or other materials that do not allow light to pass.

An air inlet may be provided in the end cap, at the edge of the inlet next to the cylindrical hollow tube, anywhere along the length of the cylindrical hollow tube, or at the connection of the battery portion 12 and the atomizer/liquid reservoir portion 14. Figure 1 shows a pair of air inlets 38 provided at the intersection between the battery portion 12 and the atomizer/liquid reservoir portion 14.

A battery 18, an LED 20, control electronics 22 and optionally an airflow sensor 24 are provided within the cylindrical hollow tube battery portion 12. The battery 18 is electrically connected to the control electronics 22, which are electrically connected to the LED 20 and the airflow sensor 24. In this example the LED 20 is at the front end of the battery portion 12, adjacent to the end cap 16 and the control electronics 22 and airflow sensor 24 are provided in the central cavity at the other end of the battery 18 adjacent the atomizer/liquid reservoir portion 14.

The airflow sensor 24 acts as a puff detector, detecting a user puffing or sucking on the atomizer/liquid reservoir portion 14 of the electronic smoking device 10. The airflow sensor 24 can be any suitable sensor for detecting changes in airflow or air pressure, such as a microphone switch including a deformable membrane which is caused to move by variations in air pressure. Alternatively the sensor may be a Hall element or an electro-mechanical sensor.

The control electronics 22 are also connected to an atomizer 26. In the example shown, the atomizer 26 includes a heating coil 28 which is wrapped around a wick 30 extending across a central passage 32 of the atomizer/liquid reservoir portion 14. The coil 28 may be positioned anywhere in the atomizer 26 and may be transverse or parallel to the liquid reservoir 34. The wick 30 and heating coil 28 do not completely block the central passage 32. Rather an air gap is provided on either side of the heating coil 28 enabling air to flow past the heating coil 28 and the wick 30. The atomizer may alternatively use other forms of heating elements, such as ceramic heaters, or fiber or mesh material heaters. Nonresistance heating elements such as sonic, piezo and jet spray may also be used in the atomizer in place of the heating coil.

The central passage 32 is surrounded by a cylindrical liquid reservoir 34 with the ends of the wick 30 abutting or extending into the liquid reservoir 34. The wick 30 may be a porous material such as a bundle of fiberglass fibers, with liquid in the liquid reservoir 34 drawn by capillary action from the ends of the wick 30 towards the central portion of the wick 30 encircled by the heating coil 28.

The liquid reservoir 34 may alternatively include wadding soaked in liquid which encircles the central passage 32 with the ends of the wick 30 abutting the wadding. In other embodiments the liquid reservoir 34 may comprise a toroidal cavity arranged to be filled with liquid and with the ends of the wick 30 extending into the toroidal cavity.

An air inhalation port 36 is provided at the back end of the atomizer/liquid reservoir portion 14 remote from the end cap 16. The inhalation port 36 may be formed from the cylindrical hollow tube atomizer/liquid reservoir portion 14 or maybe formed in an end cap.

In use, a user sucks on the electronic smoking device 10. This causes air to be drawn into the electronic smoking device 10 via one or more air inlets, such as air inlets 38, and to be drawn through the central passage 32 towards the air inhalation port 36. The change in air pressure which arises is detected by the airflow sensor 24, which generates an electrical signal that is passed to the control electronics 22. In response to the signal, the control electronics 22 activate the heating coil 28, which causes liquid present in the wick 30 to be vaporized creating an aerosol (which may comprise gaseous and liquid components) within the central passage 32. As the user continues to suck on the electronic smoking device 10, this aerosol is drawn through the central passage 32 and inhaled by the user. At the same time the control electronics 22 also activate the LED 20 causing the LED 20 to light up which is visible via the translucent end cap 16 mimicking the appearance of a glowing ember at the end of a conventional cigarette. As liquid present in the wick 30 is converted into an aerosol more liquid is drawn into the wick 30 from the liquid reservoir 34 by capillary action and thus is available to be converted into an aerosol through subsequent activation of the heating coil 28.

Some electronic smoking devices are intended to be disposable and the electric power in the battery 18 is intended to be sufficient to vaporize the liquid contained within the liquid reservoir 34, after which the electronic smoking device 10 is thrown away. In other embodiments the battery 18 is rechargeable and the liquid reservoir 34 is refillable. In the cases where the liquid reservoir 34 is a toroidal cavity, this may be achieved by refilling the liquid reservoir 34 via a refill port. In other embodiments the atomizer/liquid reservoir portion 14 of the electronic smoking device 10 is detachable from the battery portion 12 and a new atomizer/liquid reservoir portion 14 can be fitted with a new liquid reservoir 34 thereby replenishing the supply of liquid. In some cases, replacing the liquid reservoir 34 may involve replacement of the heating coil 28 and the wick 30 along with the replacement of the liquid reservoir 34. A replaceable unit comprising the atomizer 26 and the liquid reservoir 34 is called a cartomizer.

The new liquid reservoir 34 may be in the form of a cartridge having a central passage 32 through which a user inhales aerosol. In other embodiments, aerosol may flow around the exterior of the cartridge 32 to an air inhalation port 36.

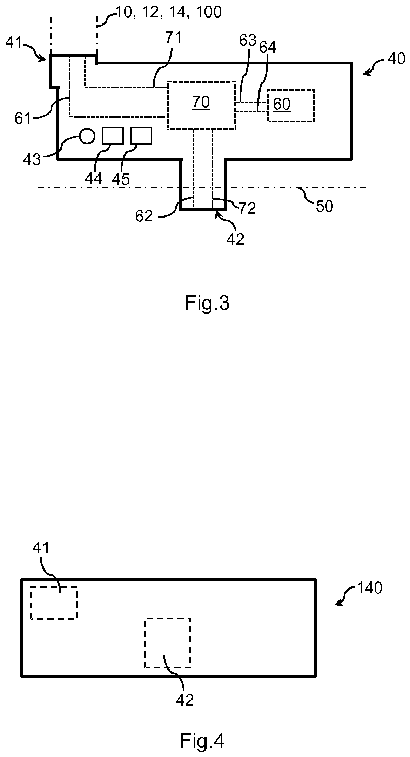

In the example shown, the electronic smoking device 10 comprises a coupling element 11 adapted to couple to a module 40, 140, 240 (shown in Figures 3 to 5) according to exemplary embodiments of the invention. In the example shown in Figure 1, the coupling element 11 is an electrical connector element 11 adapted to receive electrical energy via a galvanic connection. In the example shown, the electrical connector element 11 is connected to the battery 18 of the battery portion 12 of the electronic smoking device 10. Thus, the battery 18 of the electronic smoking device portion 12 may be charged via the electrical connector element 11. As will be described later, the module 40, 140, 240 (shown in Figures 3 to 5) comprises a first coupling element 41. Therefore, the coupling element 11, 110 (cf. Figures 1 and 2) of the electronic smoking device portion 10, 12, 14, 100 may also be called further first coupling element 11, 110 within this document.

Of course, in addition to the above description of the structure and function of a typical electronic smoking device 10, variations also exist. For example, the LED 20 may be omitted. The airflow sensor 24 may be placed adjacent the end cap 16 rather than in the middle of the electronic smoking device. The airflow sensor 24 may be replaced with a switch which enables a user to activate the electronic smoking device manually rather than in response to the detection of a change in air flow or air pressure. The further first coupling element 11 of the electronic smoking device 10 may alternatively be adapted to connect via a non-galvanic connection, for example an inductive connection or any other wireless connection. The further first connector element 11 may be adapted to receive and transmit control signals for controlling the electronic smoking device 10 or a portion 12, 14 thereof, for example by communicating with the control electronics 22.

Different types of atomizers may be used. Thus for example, the atomizer may have a heating coil in a cavity in the interior of a porous body soaked in liquid. In this design aerosol is generated by evaporating the liquid within the porous body either by activation of the coil heating the porous body or alternatively by the heated air passing over or through the porous body. Alternatively the atomizer may use a piezoelectric atomizer to create an aerosol either in combination or in the absence of a heater.

Figure 2 shows an exemplary embodiment of an electronic smoking device 100 according to the previous embodiments, but with the further first coupling element 110 of the electronic smoking device portion 12, 14, 100 being directly connected to the atomizer 26, in particular the heating coil 28, of the atomizer/liquid reservoir portion 14 of the electronic smoking device 100. Thus, the electronic smoking device 100 is adapted to enable the direct powering of the atomizer 28 via the further first coupling element 110 of the electronic smoking device 100. In the example shown, the battery portion 12 is illustrated by dotted lines to increase visibility, but it is to be understood that the invention is not limited thereto.

Of course, in addition to the above description of the structure and function of a typical electronic smoking device 100, variations also exist. For example, the further first coupling element 110 may be placed adjacent the atomizer/liquid reservoir portion 14. For example, in case the cylindrical hollow tube is a two-piece structure having a battery portion 12 and an atomizer/liquid reservoir portion 14, the further first coupling element 110 may be adapted to connect to the battery portion 12. Additionally or alternatively, the electronic smoking device 100 has a two-piece structure and may comprise two coupling elements, for example a coupling element 110 integrated with the battery portion 12, and another coupling element 110 integrated with the atomizer/liquid reservoir portion 14. For example, either only the battery portion 12, or only the atomizer/liquid reservoir portion 14 may comprise the further first coupling element 110. For example, both, the battery portion 12 and the atomizer/liquid reservoir portion 14 may each comprise a further first coupling element 110.

Figure 3 shows an exemplary embodiment of a module 40 for powering an electronic smoking device portion 10, 12, 14, 100. In the example shown in Figure 3, the electronic smoking device portion 10, 12, 14, 100 can be the electronic smoking device 10, 100 of the previous embodiments, or a portion 12, 14 thereof, for example the battery portion 12 or the atomizer/liquid reservoir portion 14.

The module 40 comprises a first coupling element 41 adapted to connect to the electronic smoking device portion 10, 12, 14, 100. The first coupling element 41 is adapted to transfer energy from the module 40 to the electronic smoking device portion 10, 12, 14, 100. Figure 3 shows a galvanic connection of the electronic smoking device portion 10, 12, 14, 100 to the module 40. Of course, the connection between the electronic smoking device portion 10, 12, 14, 100 and the first coupling element 41 can be any connection suitable for a transfer of energy from the module 40 to the electronic smoking device portion 10, 12, 14, 100. In this example, the electronic smoking device portion 10, 12, 14, 100 is connected to the module 40 via a wired connection, but may also be connected via a wireless connection. For example, the first coupling element 41 may be adapted to inductively couple the electronic smoking device portion 10, 12, 14, 100 to the module 40.

In Figure 3, the shown first coupling element 41 is a first electrical connector 41 adapted to detachably connect the electronic smoking device portion 10, 12, 14, 100 to the module 40, wherein "detachably connect the electronic smoking device portion 10, 12, 14, 100 to the module 40" may refer to any mechanically fixed, but temporary, connection. In the example shown, the first electrical connector 41 is configured to electro-mechanically join the electronic smoking device portion 10, 12, 14, 100 with the module 40. The first electrical connector 41 is adapted to electrically supply electrical energy to the electronic smoking device portion 10, 12, 14, 100. Figure 3 shows that the first coupling element 41 is configured as a female electrical connector. Of course, the first coupling element 41 can be any suitable electrical connector 41 for connecting the electronic smoking device portion 10, 12, 14, 100 to the module 40. In Figure 3, the first coupling element 41 is shown as a coaxial connector 41 for attachment of the electronic smoking device portion 10, 12, 14, 100 to the module 40. For example, the coaxial connector 41 is adapted to electro-mechanically connect the atomizer/liquid reservoir portion 14 of the electronic smoking device 10, 100 to the module 40. The coaxial connector 41 can either be a conventional connector (e.g. a standard '510 connection' used by most open e-cigarette systems) or a proprietary connector that only allows to couple specific electronic smoking device portions 10, 12, 14,100, in particular atomizer/liquid reservoir portions 14 under control of a proprietor (i.e. atomizer/liquid reservoir portions 14 under control of a specific vendor).

The first coupling element 41 is configured to transfer energy from the module 40 to the electronic smoking device portion 10, 12, 14, 100. The energy transferred via the first coupling element 41 to the electronic smoking device portion 10, 12, 14, 100 can be used by the electronic smoking device portion 10, 12, 14, 100 to charge the battery 18 of the battery portion 12 of the electronic smoking device 10, 100. The energy transferred to the electronic smoking device portion 10, 12, 14, 100 via the first coupling element 41 may be used to directly power the atomizer\liquid reservoir portion 14 of the electronic smoking device 10, 100, for example to power the heating coil 28 of the atomizer 26. The energy transferred via the first coupling element 41 to the electronic smoking device portion 10, 12, 14, 100 can be used by the electronic smoking device portion 10, 12, 14, 100 to charge the battery 18 of the battery portion 12 of the electronic smoking device 10, 100 between puffs and to directly power the atomizer\liquid reservoir portion 14 of the electronic smoking device 10, 100 during a puff.

The first coupling element 41 is further configured to transmit data between the module 40 and the electronic smoking device portion 10, 12, 14, 100. The transmission of data may refer to the transmission of analogue or digital data. The data transmission between the electronic smoking device portion 10, 12, 14, 100 and the module 40, via the first coupling element 41, enables a communication between the electronic smoking device portion 10, 12, 14, 100 and the module 40. For example, a control signal may be transmitted from the module 40 to the electronic smoking device portion 10, 12, 14, 100 to control the charging or powering process or to control other functionalities of the electronic smoking device portion 10, 12, 14, 100. Moreover, status information related to a charging state of the battery 18 within the battery portion 12 may be requested and received by the module 40 via the first coupling element 41. A control signal may be transmitted from the module 40 to the electronic smoking device portion 10, 12, 14, 100 to control the atomizer/liquid reservoir portion 14. The module 40 may thereby indicate to the control electronics 22 to control the electronic smoking device 10, 100 or a portion 12, 14 thereof.

The module 40 comprises a second coupling element 42 adapted to connect to a portable electronic device 50. The portable electronic device 50 can be any portable electronic device, including but not limited to a handheld computer, a tablet computer, a mobile phone, a media player, personal digital assistant (PDA) and the like.

The second coupling element 42 is adapted to receive energy from the portable electronic device 50. In the example shown in Figure 3, the connection of the portable electronic device 50 to the module 40 is a galvanic connection. Of course, the connection between the portable electronic device 50 and the module 40 can be any connection suitable for a transfer of energy from the portable electronic device 50 to the module 40. In the example shown, the portable electronic device 50 is connected to the module 40 via a wired connection, but a wireless connection may be used instead. For example the second coupling element 42 may be adapted to inductively couple the portable electronic device 50 to the module 40.

Figure 3 shows that the second coupling element 42 is a second electrical connector 42 adapted to detachably connect the portable electronic device 50 to the module 40, wherein "detachably connect the portable electronic device 50 to the module 40" may refer to any mechanically fixed, but temporary, connection. The second electrical connector 42 is configured to electro-mechanically join the portable electronic device 50 with the module 40. The second electrical connector 42 is adapted to receive electrical energy from the portable electronic device 50. Of course, the second coupling element 42 can be any suitable electrical connector 42 for connecting the portable electronic device 50 to the module 40. The second coupling element 42 is configured as a male electrical connector, for example a male connector according to the Universal Serial Bus (USB) standard, in particular according to the Micro-USB (mUSB) standard. The male mUSB connector protrudes from a housing of the module 40. The male mUSB connector is pluggable into the portable electronic device 50.

The energy transferred to the module 40 via the second coupling element 42 is used by the module 40 to either store the energy within the module 40 or deliver the energy to the electronic smoking device portion 10, 12, 14, 100 to directly power the electronic smoking device portion 10, 12, 14, 100, or both. For example, the energy transferred from the portable electronic device 50 to the module 40 via the first and second coupling element 41, 42 may directly power the atomizer\liquid reservoir portion 14 of the electronic smoking device 10, 100, for example the heating coil 28 of the atomizer 26.

The second coupling element 42 is further configured to transmit data between the portable electronic device 50 and the module 40. The data transferred, via the second coupling element 42, between the portable electronic device 50 and the module 40 enables the portable electronic device 50 to communicate with the electronic smoking device portion 10, 12, 14, 100 via the module 40. For example, the portable electronic device 50 may communicate with the electronic smoking device portion 10, 12, 14, 100 to control the electronic smoking device portion 10, 12, 14, 100, wherein - for example - the powering of the atomizer/liquid reservoir portion 14 is controlled by the portable electronic device 50 via the module 40, or wherein the charging of the battery 18 of the battery portion 18 is controlled by the portable electronic device 50 via the module 40. Additionally or alternatively, the module 40 may be configured to acquire information from the electronic smoking device portion 10, 12, 14, 100. For example, the module 40 may be configured to acquire status information related to a charging state of the battery 18 within the battery portion 12. The status information acquired from the electronic smoking device portion 10, 12, 14, 100 may be returned, via the module 40, to the portable electronic device 50. The data received from the portable electronic device 50 may be transmitted, by the module 40, to the control electronics 22 to control the electronic smoking device 10, 100 or a portion 12, 14 thereof, for example to control at least one of the atomizer/liquid reservoir portion 14 and one or more light-emitting diodes (LED) 20.

A power supply element 60 is provided within the module 40. The power supply element 60 is adapted to power the electronic smoking device portion 10, 100 by supplying, via the first coupling element 41, energy to the electronic smoking device portion 10, 12, 14, 100. The power supply element 60 of the module 40 comprises an energy storage 60 adapted to store energy received from the portable electronic device 50 via the second coupling element 42. The module 40 is adapted to transfer the energy, received via the second coupling element 42, to the energy storage 60 of the module 40. The energy storage 60 shown in Figure 3 is a storage battery adapted to charge the electronic smoking device portion 10, 12, 14, 100. The energy storage 60 may also be adapted to directly power the electronic smoking device portion 10, 12, 14, 100, for example the atomizer/liquid reservoir portion 14. The energy storage 60 can be any suitable secondary battery to supply power to the electronic smoking device portion 10, 12, 14, 100. For example, the energy storage 60 may be a rechargeable lithium-ion battery. The energy storage 60 is integrated in a housing of the module 40. The energy storage 60 has a capacity between 1 and 5000 milliampere-hours (mAh), preferred between 10 and 2500 mAh, more preferred between 30 and 500 mAh, even more preferred approximately 400 mAh. The power supply element 60 is adapted to transfer electrical power to the electronic smoking device portion 10, 12, 14, 100 via the first coupling element 41 with an electrical current between 0.1 and 5 Amperes, preferably between 0.5 and 4 Amperes, even more preferably between 1 and 3 Amperes.

The power supply element 60 may be directly controllable, via the second coupling element 42, by the portable electronic device 50. Additionally or alternatively, the module 40 may comprise a controller unit 70 adapted to control the power supply element 60.

The controller unit 70 may optionally be provided within the module 40. The controller unit 70 is configured to communicate with the portable electronic device 50. Figure 3 shows that the controller unit 70 comprises a microcontroller 70, wherein the microcontroller 70 is connected to the first coupling element 41 via circuit portions 61, 71, and to the second coupling element 42 via circuit portions 62, 72. The circuit portions 61, 62, 71, 72 are adapted to transmit electrical signals between the microcontroller 70, on the one hand, and the first and second coupling elements 41, 42, on the other hand. In the example shown, a mobile application program executed on the portable electronic device 50 may trigger the portable electronic device 50 to generate an input signal which is transmitted to the controller unit 70 of the module 40 to control at least one of the power supply element 60 and the electronic smoking device portion 10, 12, 14, 100. The controller unit 70 may be configured to transmit a control signal to the electronic smoking device portion 10, 12, 14, 100 via the first coupling element 41. The control signal is transmitted by the controller unit 70 to the electronic smoking portion 10, 12, 14 upon reception of the input signal via the second coupling element 42. Thus, the module 40 is adapted to enable a user of the portable electronic device 50 to at least one of control the electronic smoking device portion 10, 12, 14, 100, and acquire information from the electronic smoking device portion 10, 12, 14, 100.

In case the power supply element 60 is directly controlled, via the second coupling element 42, by the portable electronic device 50, the power supply element 60 may comprise or be integrated with its own basic microcontroller (not shown). In this case, the module 40 is adapted to transfer energy to and from the energy storage 60 without another intervening microcontroller. In this case, the electrical circuit portions 61, 62, 71, 72 may not be connected to a controller unit 70, but directly connected to the power supply element 60 (not shown).

In case the module 40 comprises the controller unit 70, the power supply element 60 may comprise only the energy storage 60, but not its own basic microcontroller. In the example shown in Figure 3, electrical energy is transferred from the module 40 to the electronic smoking device portion 10, 12, 14, 100 via electrical circuit portions 61, 63, 64, 71 especially via galvanic connections. The energy stored in the portable electronic device 50 is delivered to the energy storage 60 of the module 40 via the second coupling element 42, wherein the power is supplied from the second coupling element 42 to the energy storage 60 via the circuit portions 62, 63, 64, 72.

In both cases - i.e. with or without controller unit 70 -, the module 40 is adapted to supply energy, received from the portable electronic device 50 via the second coupling element 42, to the energy storage 60. That is, the module 40 may be either adapted to supply the energy indirectly - via the electrical circuit portions 61, 63, 64, 71 and via control electronics such as the controller unit 70 - from the portable electronic device 50 to the energy storage 60 (see Fig. 3) or directly - e.g. without control electronics in between - from the portable electronic device 50 to the energy storage 60 (not shown in Fig. 3). Likewise, the module 40 may be adapted to supply energy of the energy storage 60 via the first coupling element 41 to the electronic smoking device portion 10, 12, 14, 100, either indirectly - via the circuit portions 62, 63, 64, 72 and via control electronics such as the controller unit 70 - or directly - e.g. without control electronics in between.

The controller unit 70 may be adapted to power the electronic smoking device portion 10, 12, 14, 100 with power from the energy storage 60, via the first coupling element 41. The controller unit 70 may be further adapted to transfer energy from the portable electronic device 50 to the energy storage 60, via the second coupling element 42. The controller unit 70 may herein also be called control electronics. For example, the energy storage 60 may be connected to the control electronics, for example a printed circuit board (PCB) having a microcontroller, wherein the control electronics may be adapted to direct the power from a selected input device to an output device. The input device may be selected from at least one of the portable electronic device 50 and the energy storage 60. The output device may be selected from at least one of the electronic smoking device portion 10, 12, 14, 100 and the energy storage 60. For example, in case the energy storage 60 comprises relatively low amounts of energy, the power, received from the portable electronic device 50, is transferred via the PCB to the energy storage 60. When the user takes a puff, energy is transferred, via the PCB, from the energy storage 60 to the electronic smoking device portion 10, 12, 14, 100.

An activation button 43 is optionally provided within the module 40. The activation button 43 is operable to generate an activation signal. The controller unit 70 is configured to transmit a power control signal to the electronic smoking device portion 10, 12, 14, 100 upon generation of the activation signal. For example, the power control signal is passed to the control electronics 22. In response to the power control signal passed to the control electronics 22, the control electronics 22 activates the heating coil 28, which causes liquid present in the wick 30 to be vaporized creating an aerosol (which may comprise gaseous and liquid components) within the central passage 32. The activation button is a push-button, but any other suitable sensor may be used to detect an activation of the atomizer 26 by the user.

A first light source 44 and a second light source 45 are optionally integrated with the module 40 to indicate whether the module 40 is in the process of charging or not. For example, the first light source 44 may be a red LED 44 which emits red light when the module 40 is charging the energy storage 60, and the second light source 45 may be a green LED 45 which emits green light when the module 40 has completed charging the energy storage 60. The first and second light sources 44, 45 or additional light sources (not shown) may likewise indicate whether the electronic smoking device portion 10, 12, 14, 100 has completed charging or not.

Of course, in addition to the above description of the structure and function of a typical module, variations also exist. For example, the first and second light source, and the activation button may be omitted. At least one of the first electrical connector 41 and second electrical connector 42 may be replaced with an inductive coupling unit which enables a wireless transfer of energy.

Different types of power supply elements may be used. Thus for example, the power supply element may be realized by any power supply unit or by any battery charging unit suitable to power the electronic smoking device portion 10, 12, 14, 100. Powering the electronic smoking device portion 10, 12, 14, 100 may include any supply of energy - for example electrical energy - to the electronic smoking device portion 10, 12, 14, 100 via the first coupling element 41. For example, electrical energy may be supplied to the battery portion 12 of the electronic smoking device 10, 100 to charge the battery 18. For example, electrical energy may be supplied to the atomizer/liquid reservoir portion 14 of the electronic smoking device 10, 100 to directly power the atomizer/liquid reservoir portion 14.

Figure 4 shows a schematic cross-sectional illustration of another exemplary embodiment of a module 140, wherein at least one of the first and second coupling elements 41, 42 of the module 140 are adapted to wirelessly transfer energy between the module 140 and the electronic smoking device portion 10, 12, 14, 100 or between the module 140 the portable electronic device 50, respectively. Of course, only one or both of the first and second coupling elements 41, 42 may be adapted for wireless energy transfer. The transfer of energy may be realized by electrodynamic coupling (which is herein also called inductive coupling or magnetic coupling) or other kinds of energy coupling. Likewise, at least one of the first and second coupling elements 41, 42 of the module 140 are adapted to wirelessly transfer data between the module 140 and the electronic smoking device portion 10, 12, 14, 100 or between the module 140 and the portable electronic device 50, respectively.

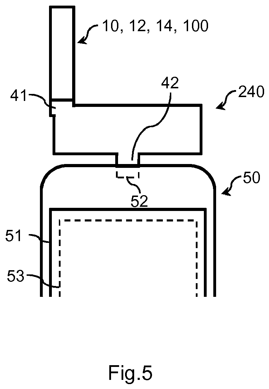

Figure 5 shows a schematic view of an exemplary embodiment of a system for powering an electronic smoking device portion 10, 12, 14, 100, wherein the system comprises the electronic smoking device portion 10, 12, 14, 100, a portable electronic device 50, and a module 240.

For example, the electronic smoking device portion 10, 12, 14, 100 is any one of the electronic smoking devices 10, 100 of the previous embodiments, or a portion 12, 14 thereof. For example, the module 240 is any one of the modules 40, 140 of the previous embodiments.

The electronic smoking device portion 10, 12, 14, 100 is coupled to the module 240 via the first coupling element 41, and the portable electronic device is coupled to the module 240 via the second coupling element 42. For example, the electronic smoking device portion 10, 12, 14, 100 is electrically connected to the module 240 via the first electrical connector 41, and the portable electronic device is electrically connected to the module 240 via the second electrical connector 42.

The portable electronic device 50 is configured to control, via the module 240, the electronic smoking device portion 10, 12, 14, 100. In the example shown in Figure 5, the portable electronic device 50 comprises a human-machine interface 51 to enable a user to control the electronic smoking device portion 10, 12, 14, 100 via the human-machine interface 51. In this example, the human-machine interface 51 is a touch screen of the portable electronic device 50. The human-machine interface 51 may also be realized by any other input device, for example by a keyboard, a button, and the like. The portable electronic device 50 is adapted to generate an input signal upon interaction of the user with the human-machine interface 51, and to transmit the input signal to the module 240 upon detection of the user input at the human-machine interface 51.

The electronic smoking device portion 10, 12, 14, 100 is adapted to be coupled to the first coupling element 42 of the module 240, for example by means of a mating electrical connector adapted to connect to the first electrical connector 41. Likewise, the portable electronic device 50 comprises a further second coupling element 52 adapted to be coupled to the second coupling element 42 of the module 240. For example, the module 240 comprises a male mUSB connector 42 which protrudes from the housing of the module 240, and the portable electronic device 50 comprises a female mUSB connector 52 which is a mating connector to the male mUSB connector 42 of the module 240.

The module 240 is optionally configured to transmit an identification signal to the portable electronic device 50 upon attachment of the portable electronic device 50 to the second coupling element 42. The identification signal indicates to the portable electronic device 50, that the module 240 is a module 240 for charging an electronic smoking device portion 10, 12, 14, 100. The identification signal optionally comprises information related to the vendor or specific type of hardware of at least one of the module 240 and the electronic smoking device portion 10, 12, 14, 100. The module 240 is configured to trigger the launch of a hardware-specific or vendor-specific application program (mobile-app) on the portable electronic device 50 upon coupling of the module 240 with the portable electronic device 50 via the second coupling element 42. For example, the identification signal triggers an invitation message to be displayed on the portable electronic device 50, wherein the invitation message enables the user to download a hardware-specific or vendor-specific mobile application program from the Internet. For example, the module 240 is adapted to begin charging at least one of the energy storage 60 of the module 240 and the battery 18 of the electronic smoking device portion 10, 12, 14, 100 upon coupling of the portable electronic device 50 to the second coupling element 42, or upon coupling of the electronic smoking device portion 10, 12, 14, 100 to the first coupling element 41, respectively. The module 240 may support "USB on-the-go", which means that the charging of the module 240, in particular of the energy storage 60 of the module 240, is started upon coupling the second and further second coupling elements 42, 52 respectively. For example, the energy storage 60 of the module 240 may thereby be supplied with electrical power of a battery 53 of the portable electronic device 50 at a current of 100 mA (Milliampere) or higher.

In use, the electronic smoking device portion 10, 12, 14, 100 is powered via the module 240, when the electronic smoking device portion 10, 12, 14, 100 is coupled to the first coupling element 41.

In case the battery 18 of the electronic smoking device 10, 100 is almost or completely discharged, or in case the atomizer/liquid reservoir portion 14 is detached from the battery portion 12, the atomizer/liquid reservoir portion 14 may be directly powered by the module 240, when the atomizer/liquid reservoir portion 14 is directly coupled to the module 240 via the first coupling element 41.

In case the battery 18 of the electronic smoking device 10, 100 is almost or completely discharged, the battery 18 of the electronic smoking device portion 10, 100 may be recharged by the module 240, when the electronic smoking device 10, 100 is coupled to the module 240 via the first coupling element 41.

In case the energy storage 60 of the module 240 is almost or completely discharged, the energy storage 60 may be recharged by the portable electronic device 50, when the portable electronic device 50 is coupled to the second coupling element 42. A user may interact with the human-machine interface 51 of the portable electronic device 50 to communicate with the electronic smoking device portion 10, 12, 14, 100. The portable electronic device 50 may comprise a graphical user interface (GUI) of a mobile application program to enable a user to adjust power settings, view vaping history, and use other features of the electronic smoking device portion 10, 12, 14, 100 via the module 240.

The communication between the portable electronic device 50 and the electronic smoking device portion 10, 12, 14, 100, via the module 240, may include at least one of controlling the electronic smoking device portion 10, 12, 14, 100 and acquiring information from the electronic smoking device portion 10, 12, 14, 100. For example, the electronic smoking device portion 10, 12, 14, 100 may be controlled by controlling at least one of the control electronics 22, the battery 18, the LED 20, the atomizer 26, and other elements of the electronic smoking device portion 10, 12, 14, 100, and the acquired information may be related to at least one of a charging state of the battery 18 of the electronic smoking device portion 10, 12, 14, 100, a vaping history, and any other information retrievable from the electronic smoking device portion 10, 12, 14, 100.

In summary, in one aspect the module for powering an electronic smoking device portion comprises a first coupling element adapted to connect to the electronic smoking device portion, a second coupling element adapted to connect to a portable electronic device, and a power supply element adapted for powering the electronic smoking device portion, wherein the power supply element comprises an energy storage, wherein the module is adapted to supply energy, received from the portable electronic device via the second coupling element, to the energy storage.

A relatively small storage battery of the module allows the accumulation of an amount of energy which is sufficient to power an electronic smoking device or a portion thereof. The portable electronic device, for example a mobile phone, may therefore be configured to supply power to the module via a further second coupling element. The further second coupling element of the portable electronic device may be adapted to connect to the second coupling element of the module. The further coupling element may be a charging connection of the portable electronic device. The charging connection may additionally be configured to recharge a secondary battery of the portable electronic device by using a conventional charging device for the portable electronic device. However, since the portable electronic device may be capable to supply power to the module at an electrical current of only a few hundred Milliamperes, the energy storage of the module enables to supply a sufficient amount of energy to the electronic smoking device portion per time interval.

The electronic smoking device portion may comprise an atomizer, wherein the module is adapted to power the atomizer of the electronic smoking device portion by transferring energy, via the first coupling element, from the energy storage to the atomizer of the electronic smoking device portion.

The electronic smoking device portion may comprise a battery, wherein the module is adapted to power the battery of the electronic smoking device portion in order to charge the battery of the electronic smoking device portion, The battery of the electronic smoking device portion may be charged by transferring energy, via the first coupling element, from the energy storage to the battery of the electronic smoking device portion.

The energy storage may comprise a storage battery adapted to power the electronic smoking device portion via the first coupling element.

The power supply element of the module may be configured to supply power to the electronic smoking device portion with a higher electrical current than the electrical current provided by the portable electronic device.

The energy storage may comprise a rechargeable lithium-ion battery.

The energy storage may have a capacity between 1 and 5000 milliampere-hours (mAh), preferred between 10 and 2500 mAh, more preferred between 30 and 500 mAh, even more preferred approximately 400 mAh.

An electrical current of, for example approximately 100 mA, may be provided by the portable electronic device and subsequently be converted, by the module, into electrical current between 1-2 Amperes. That is, the energy storage of the module is configured to convert the lower current delivered from the portable electronic device into a higher current, i.e. such that enough energy for a puff is provided. For example, assuming a charging efficiency of 70%, it may take no more than 30 minutes to fully charge a battery of the module (having a capacity of approximately 40 mAh), when coupled to a portable electronic device (which is configured to supply power with an electrical current of approximately 100 mA). Once fully charged, the portable electronic device can be unplugged and the module may supply power for about 20 puffs without any additional power source. If the portable electronic device remains coupled to the module, the user will be able to get more than 20 puffs as the portable electronic device charges the energy storage of the module between subsequent puffs.

The module may comprise a controller unit configured to communicate with the portable electronic device. The controller unit may communicate with the portable electronic device via the second coupling element of the module.

The controller unit may be configured to transmit, via the first coupling element, a control signal to the electronic smoking device portion upon reception, via the second coupling element, of an input signal from the portable electronic device.

The electronic smoking device portion may be controlled, via the module, by using the portable electronic device, thereby enabling the control of an electronic smoking device portion, even if the electronic smoking device portion does not comprise any interface to control the electronic smoking device portion. Thus, a simple structure of an electronic smoking device portion may be provided.

The module may comprise an activation button operable to generate an activation signal, wherein the controller unit is configured to transmit a power control signal to the electronic smoking device portion upon generation of the activation signal.

The power control signal may enable the direct control of the atomizer, thereby enabling the user to activate the atomizer without pressing a button or other sensor on the electronic smoking device portion, and simplifying its use.

The power supply element may be adapted to transfer electrical power to the electronic smoking device portion via the first coupling element with an electrical current between 0.1 and 5 Amperes, preferably between 0.5 and 4 Amperes, even more preferably between 1 and 3 Amperes.

The power supplied by the portable electronic device at a lower current may be converted, by the module, into power supplied to the electronic smoking device portion at a higher current, such that the electronic smoking device portion can be directly powered - and thus used -, even if the battery of the electronic smoking device portion is discharged.

The first coupling element may be a female electrical connector, in particular a coaxial connector. The second coupling element may be a male electrical connector, in particular a male connector according to the Micro-USB standard.

The module may be configured to transmit an identification signal to the portable electronic device upon attachment of the portable electronic device to the second coupling element.

The identification signal being transmitted to the portable electronic device may trigger the execution of a computer program on the portable electronic device, wherein the computer program is configured to control the electronic smoking device portion, via the module. Alternatively, a download of such a computer program may be initiated, in case the computer program is not installed on the portable electronic device.

In one aspect, a system for powering an electronic smoking device portion may comprise a portable electronic device, an electronic smoking device portion, and a module, wherein the portable electronic device is coupled to the module, wherein the electronic smoking device portion is coupled to the module, wherein the portable electronic device is configured to supply energy to the module.

A system for powering an electronic smoking device portion may be provided, which enables a mobile user to recharge and use the electronic smoking device portion on the go.

The portable electronic device may be configured to control the electronic smoking device portion via the module.

The portable electronic device may be configured to control the powering of the electronic smoking device portion via the module. The portable electronic device may be configured to adjust at least one of the power settings of the electronic smoking device portion, and request and receive usage data from the portable electronic device. The usage data may include a vaping history of the electronic smoking device portion.

The portable electronic device may comprise a human-machine interface, wherein the portable electronic device is configured to transmit the input signal to the module upon detection of a user input at the human-machine interface. Thus, a relatively simple control of the powering process, as well as other functionalities of the electronic smoking device portion may be provided via the module.

The energy storage of the power supply element of the module may have a higher discharge rate than a secondary battery of the portable electronic device.

In one aspect, a method for powering an electronic smoking device portion by using a module may comprise coupling a portable electronic device to the second coupling element, supplying energy, by the portable electronic device, to the module via the second coupling element, coupling the electronic smoking device portion to the first coupling element, and powering, by the power supply element, the electronic smoking device portion via the first coupling element. The method may further comprise communicating with the electronic smoking device portion, via the module by using a human-machine interface of the portable electronic device. Communicating with the electronic smoking device portion may include controlling the powering of the electronic smoking device portion via the module. Communicating with the electronic smoking device portion may include adjusting at least one of the power settings of the electronic smoking device portion, and requesting or receiving usage data from the portable electronic device. The usage data may include a vaping history of the electronic smoking device portion. A user may be enabled to adjust settings of the electronic smoking portion, as well as acquire information about the electronic smoking device portion without the need for buttons or a display on the electronic smoking device portion itself.

### LIST OF REFERENCE SIGNS

- 10, 100: electronic smoking device / electronic smoking device portion
- 11, 110: coupling element
- 12: battery portion / electronic smoking device portion
- 14: atomizer/liquid reservoir portion / electronic smoking device portion
- 16: end cap
- 18: battery
- 20: light-emitting diode (LED)
- 22: control electronics
- 24: airflow sensor
- 26: atomizer
- 28: heating coil
- 30: wick
- 32: central passage
- 34: liquid reservoir
- 36: air inhalation port
- 38: air inlets
- 40, 140, 240: module
- 41: first coupling element
- 42: second coupling element
- 43: activation button
- 50: portable electronic device
- 51: human-machine interface
- 52: further second coupling element
- 53: secondary battery
- 60: energy storage / power supply element
- 61, 62, 63, 64: circuit portion
- 70: microcontroller / controller unit
- 71, 72: circuit portions

## Claims

1. A module (40, 140, 240) for powering an electronic smoking device portion (10, 12, 14, 100), the module (40, 140, 240) comprising:
a first coupling element (41) adapted to connect to the electronic smoking device portion (10, 12, 14, 100),
a second coupling element (42) adapted to connect to a portable electronic device (50),
a power supply element (60) adapted for powering the electronic smoking device portion (10, 12, 14, 100), wherein the power supply element (60) comprises an energy storage (60), wherein the module (40, 140, 240) is adapted to supply energy, received from the portable electronic device (50) via the second coupling element (42), to the energy storage (60),
a controller unit (70) configured to communicate with the portable electronic device (50), and
**characterized in that**
the controller (70) is adapted to control charging of a battery (18) of an electronic smoking device portion (10, 100) between puffs and to directly power an atomizer/liquid reservoir portion (14) of the electronic smoking device portion (10, 100) during a puff.

2. The module (40, 140, 240) according to claim 1, wherein the energy storage (60) comprises a storage battery adapted to power the electronic smoking device portion (10, 12, 14, 100) via the first coupling element (41).

3. The module (40, 140, 240) according to any of the previous claims, wherein the energy storage (60) has a capacity between 1 and 5000 milliampere-hours (mAh), preferred between 10 and 2500 mAh, more preferred between 30 and 500 mAh, even more preferred approximately 400 mAh.

4. The module (40, 140, 240) according to claim 1, wherein the controller unit (70) is configured to transmit a control signal to the electronic smoking device portion (10, 12, 14, 100) via the first coupling element (41) upon reception of an input signal from the portable electronic device (50) via the second coupling element (42).

5. The module (40, 140, 240) according to any of the previous claims, wherein the module (40, 140, 240) comprises an activation button (43) operable to generate an activation signal, wherein the controller unit (70) is configured to transmit a power control signal to the electronic smoking device portion (10, 12, 14, 100) upon generation of the activation signal.

6. The module (40, 140, 240) according to any of the previous claims, wherein the power supply element (60) is adapted to transfer electrical power to the electronic smoking device portion (10, 12, 14, 100) via the first coupling element (41) with an electrical current between 0.1 and 5 Amperes, preferably between 0.5 and 4 Amperes, even more preferably between 1 and 3 Amperes.

7. The module (40, 140, 240) according to any of the previous claims, wherein the first coupling element (41) is a female electrical connector, in particular a coaxial connector.

8. The module (40, 140, 240) according to any of the previous claims, wherein the second coupling element (42) is a male electrical connector, in particular a male connector according to the Micro-USB standard.

9. The module (40, 140, 240) according to any of the previous claims, wherein the module (40, 140, 240) is configured to transmit an identification signal to the portable electronic device (50) upon attachment of the portable electronic device (50) to the second coupling element (42).

10. A system for powering an electronic smoking device portion (10, 12, 14, 100), the system comprising:
a portable electronic device (50),
the electronic smoking device portion (10, 12, 14, 100),
a module (40, 140, 240) according to any one of claims 1 to 9,
wherein the portable electronic device (50) is coupled to the module (40, 140, 240),
wherein the electronic smoking device portion (10, 12, 14, 100) is coupled to the module (40, 140, 240),
wherein the portable electronic device (50) is configured to supply energy to the module (40, 140, 240).

11. The system according to claim 10, wherein the portable electronic device (50) is configured to control the electronic smoking device (10, 12, 14, 100) via the module (40, 140, 240).

12. The system according to any one of claims 10 to 11, wherein the portable electronic device (50) comprises a human-machine interface (51), wherein the portable electronic device (50) is configured to transmit an input signal to the module (40, 140, 240) upon detection of a user input at the human-machine interface (51).

13. A method for powering an electronic smoking device portion (10, 12, 14, 100) wherein the method comprises:
providing a module (40, 140, 240) according to any one of claims 1 to 9,
providing a portable electronic device 50,
coupling the portable electronic device (50) to the second coupling element (42), supplying energy, by the portable electronic device (50), to the module (40, 140, 240) via the second coupling element (42),
coupling the electronic smoking device portion (10, 12, 14, 100) to the first coupling element (41),
powering, by the power supply element (60), the electronic smoking device portion (10, 12, 14, 100) via the first coupling element (41),
communicating with the portable electronic device (50) using the controller unit (70) of the module (40, 140, 240), and
controlling charging of a battery (18) of an electronic smoking device portion (10, 100) between puffs and directly powering an atomizer/liquid reservoir portion (14) of the electronic smoking device portion (10, 100) during a puff.

14. The method according to claim 13, wherein the method further comprises:
communicating with the electronic smoking device portion (10, 12, 14), via the module (40, 140, 240), by further using a human-machine interface (51) of the portable electronic device (50).

## Patentansprüche

1. Modul (40, 140, 240) zur Stromversorgung eines elektronischen Rauchvorrichtungsteils (10, 12, 14, 100), wobei das Modul (40, 140, 240) Folgendes umfasst:
ein erstes Kopplungselement (41), das dazu ausgelegt ist, mit dem elektronischen Rauchvorrichtungsteil (10, 12, 14, 100) verbunden zu werden,
ein zweites Kopplungselement (42), das dazu ausgelegt ist, mit einer tragbaren elektronischen Vorrichtung (50) verbunden zu werden,
ein Stromversorgungselement (60), das zur Stromversorgung des elektronischen Rauchvorrichtungsteils (10, 12, 14, 100) ausgelegt ist, wobei das Stromversorgungselement (60) einen Energiespeicher (60) umfasst, wobei das Modul (40, 140, 240) dazu ausgelegt ist, Energie, die von der tragbaren elektronischen Vorrichtung (50) über das zweite Kopplungselement (42) erhalten wird, dem Energiespeicher (60) zuzuführen,
eine Steuerungseinheit (70), die dazu ausgestaltet ist, mit der tragbaren elektronischen Vorrichtung (50) zu kommunizieren, und
**dadurch gekennzeichnet, dass**
die Steuerung (70) dazu ausgelegt ist, zwischen Zügen das Laden einer Batterie (18) eines elektronischen Rauchvorrichtungsteils (10, 100) zu steuern und während eines Zuges einen Zerstäuber-/Flüssigkeitsvorratsbehälterteil (14) des elektronischen Rauchvorrichtungsteils (10, 100) direkt mit Strom zu versorgen.

2. Modul (40, 140, 240) nach Anspruch 1, wobei der Energiespeicher (60) eine Speicherbatterie umfasst, die dazu ausgelegt ist, den elektronischen Rauchvorrichtungsteil (10, 12, 14, 100) über das erste Kopplungselement (41) mit Strom zu versorgen.

3. Modul (40, 140, 240) nach einem der vorangehenden Ansprüche, wobei der Energiespeicher (60) eine Kapazität zwischen 1 und 5000 Milliamperestunden (mAh), bevorzugt zwischen 10 und 2500 mAh, besonders bevorzugt zwischen 30 und 500 mAh, ganz besonders bevorzugt von ungefähr 400 mAh, aufweist.

4. Modul (40, 140, 240) nach Anspruch 1, wobei die Steuerungseinheit (70) dazu ausgestaltet ist, bei Empfang eines Eingabesignals von der tragbaren elektronischen Vorrichtung (50) über das zweite Kopplungselement (42) ein Steuersignal über das erste Kopplungselement (41) an den elektronischen Rauchvorrichtungsteil (10, 12, 14, 100) zu übermitteln.

5. Modul (40, 140, 240) nach einem der vorangehenden Ansprüche, wobei das Modul (40, 140, 240) einen Aktivierungsknopf (43) umfasst, der betätigbar ist, um ein Aktivierungssignal zu erzeugen, wobei die Steuerungseinheit (70) dazu ausgestaltet ist, bei Erzeugung des Aktivierungssignals ein Stromregelsignal an den elektronischen Rauchvorrichtungsteil (10, 12, 14, 100) zu übermitteln.

6. Modul (40, 140, 240) nach einem der vorangehenden Ansprüche, wobei das Stromversorgungselement (60) dazu ausgelegt ist, elektrischen Strom mit einer elektrischen Stromstärke zwischen 0,1 und 5 Ampere, vorzugsweise zwischen 0,5 und 4 Ampere, besonders bevorzugt zwischen 1 und 3 Ampere, über das erste Kopplungselement (41) an den elektronischen Rauchvorrichtungsteil (10, 12, 14, 100) zu übertragen.

7. Modul (40, 140, 240) nach einem der vorangehenden Ansprüche, wobei das erste Kopplungselement (41) eine elektrische Buchse, insbesondere eine Koaxialbuchse, ist.

8. Modul (40, 140, 240) nach einem der vorangehenden Ansprüche, wobei das zweite Kopplungselement (42) ein elektrischer Stecker, insbesondere ein Stecker gemäß dem Micro-USB-Standard, ist.

9. Modul (40, 140, 240) nach einem der vorangehenden Ansprüche, wobei das Modul (40, 140, 240) dazu ausgestaltet ist, bei Anbringung der tragbaren elektronischen Vorrichtung (50) an dem zweiten Kopplungselement (42) ein Identifikationssignal an die tragbare elektronische Vorrichtung (50) zu übermitteln.

10. System zur Stromversorgung eines elektronischen Rauchvorrichtungsteils (10, 12, 14, 100), wobei das System Folgendes umfasst:
eine tragbare elektronische Vorrichtung (50),
den elektronischen Rauchvorrichtungsteil (10, 12, 14, 100),
ein Modul (40, 140, 240) nach einem der Ansprüche 1 bis 9,
wobei die tragbare elektronische Vorrichtung (50) mit dem Modul (40, 140, 240) gekoppelt ist,
wobei der elektronische Rauchvorrichtungsteil (10, 12, 14, 100), mit dem Modul (40, 140, 240) gekoppelt ist,
wobei die tragbare elektronische Vorrichtung (50) dazu ausgestaltet ist, dem Modul (40, 140, 240) Energie zuzuführen.

11. System nach Anspruch 10, wobei die tragbare elektronische Vorrichtung (50) dazu ausgestaltet ist, die elektronische Rauchvorrichtung (10, 12, 14, 100) über das Modul (40, 140, 240) zu steuern.

12. System nach einem der Ansprüche 10 bis 11, wobei die tragbare elektronische Vorrichtung (50) eine Mensch-Maschine-Schnittstelle (51) umfasst, wobei die tragbare elektronische Vorrichtung (50) dazu ausgestaltet ist, bei Erkennung einer Benutzereingabe an der Mensch-Maschine-Schnittstelle (51) ein Eingabesignal an das Modul (40, 140, 240) zu übermitteln.

13. Verfahren zur Stromversorgung eines elektronischen Rauchvorrichtungsteils (10, 12, 14, 100), wobei das Verfahren Folgendes umfasst:
Bereitstellen eines Moduls (40, 140, 240) nach einem der Ansprüche 1 bis 9,
Bereitstellen einer tragbaren elektronischen Vorrichtung (50),
Koppeln der tragbaren elektronischen Vorrichtung (50) mit dem zweiten Kopplungselement (42),
Zuführen von Energie zu dem Modul (40, 140, 240) durch die tragbare elektronische Vorrichtung (50) über das zweite Kopplungselement (42),
Koppeln des elektronischen Rauchvorrichtungsteils (10, 12, 14, 100) mit dem ersten Kopplungselement (41),
Versorgen des elektronischen Rauchvorrichtungsteils (10, 12, 14, 100) mit Strom durch das Stromversorgungselement (60) über das erste Kopplungselement (41),
Kommunizieren mit der tragbaren elektronischen Vorrichtung (50) unter Verwendung der Steuerungseinheit (70) des Moduls (40, 140, 240) und
Steuern des Ladens einer Batterie (18) eines elektronischen Rauchvorrichtungsteils (10, 100) zwischen Zügen und direktes Versorgen eines Zerstäuber-/Flüssigkeitsvorratsbehälterteils (14) des elektronischen Rauchvorrichtungsteils (10, 100) mit Strom während eines Zuges.

14. Verfahren nach Anspruch 13, wobei das Verfahren ferner Folgendes umfasst:
Kommunizieren mit dem elektronischen Rauchvorrichtungsteil (10, 12, 14) über das Modul (40, 140, 240), indem ferner eine Mensch-Maschine-Schnittstelle (51) der tragbaren elektronischen Vorrichtung (50) verwendet wird.

## Revendications

1. Module (40, 140, 240) pour alimenter une partie de dispositif de cigarette électronique (10, 12, 14, 100), le module (40, 140, 240) comprenant :
un premier élément de couplage (41) conçu pour être connecté à la partie de dispositif de cigarette électronique (10, 12, 14, 100),
un deuxième élément de couplage (42) conçu pour être connecté à un dispositif électronique portable (50),
un élément d'alimentation en énergie (60) conçu pour alimenter la partie de dispositif de cigarette électronique (10, 12, 14, 100), l'élément d'alimentation en énergie (60) comprenant un système de stockage d'énergie (60), le module (40, 140, 240), étant conçu pour alimenter le système de stockage d'énergie (60) en énergie, reçue du dispositif électronique portable (50) via le deuxième élément de couplage (42),
une unité de contrôleur (70) conçue pour communiquer avec le dispositif électronique portable (50), et
**caractérisé en ce que**
le contrôleur (70) est conçu pour commander le chargement d'une batterie (18) d'une partie de dispositif de cigarette électronique (10, 100) entre les bouffées et pour alimenter directement une partie de réservoir d'atomiseur/de liquide (14) de la partie de dispositif de cigarette électronique (10, 100) pendant une bouffée.

2. Module (40, 140, 240) selon la revendication 1, le système de stockage d'énergie (60) comprenant une batterie de stockage conçue pour alimenter la partie de dispositif de cigarette électronique (10, 12, 14, 100) via le premier élément de couplage (41).

3. Module (40, 140, 240) selon l'une quelconque des revendications précédentes, le système de stockage d'énergie (60) ayant une capacité entre 1 et 5 000 milliampères-heure (mAh), de façon préférentielle entre 10 et 2 500 mAh, de façon plus préférentielle entre 30 et 500 mAh, et de façon encore plus préférentielle environ 400 mAh.

4. Module (40, 140, 240) selon la revendication 1, l'unité de contrôleur (70) étant configurée pour transmettre un signal de commande à la partie de dispositif de cigarette électronique (10, 12, 14, 100) via le premier élément de couplage (41) lors de la réception d'un signal d'entrée du dispositif électronique portable (50) via le deuxième élément de couplage (42).

5. Module (40, 140, 240) selon l'une quelconque des revendications précédentes, le module (40, 140, 240) comprenant un bouton d'activation (43) utilisable pour générer un signal d'activation, l'unité de contrôleur (70) étant configurée pour transmettre un signal de commande d'alimentation à la partie de dispositif de cigarette électronique (10, 12, 14, 100) lors de la génération du signal d'activation.

6. Module (40, 140, 240) selon l'une quelconque des revendications précédentes, l'élément d'alimentation en énergie (60) étant conçu pour transférer de l'énergie électrique à la partie de dispositif de cigarette électronique (10, 12, 14, 100) via le premier élément de couplage (41) avec un courant électrique entre 0,1 et 5 ampères, de façon préférentielle entre 0,5 et 4 ampères, de façon encore plus préférentielle entre 1 et 3 ampères.

7. Module (40, 140, 240) selon l'une quelconque des revendications précédentes, le premier élément de couplage (41) étant un connecteur électrique femelle, en particulier un connecteur coaxial.

8. Module (40, 140, 240) selon l'une quelconque des revendications précédentes, le deuxième élément de couplage (42) étant un connecteur électrique mâle, en particulier un connecteur mâle conforme au standard Micro-USB.

9. Module (40, 140, 240) selon l'une quelconque des revendications précédentes, le module (40, 140, 240) étant conçu pour transmettre un signal d'identification au dispositif électronique portable (50) lors du raccordement du dispositif électronique portable (50) au deuxième élément de couplage (42).

10. Système pour alimenter une partie de dispositif de cigarette électronique (10, 12, 14, 100), le système comprenant :
un dispositif électronique portable (50),
la partie de dispositif de cigarette électronique (10, 12, 14, 100),
un module (40, 140, 240) selon l'une quelconque des revendications 1 à 9,
le dispositif électronique portable (50) étant couplé au module (40, 140, 240),
la partie de dispositif de cigarette électronique (10, 12, 14, 100) étant couplée au module (40, 140, 240),
le dispositif électronique portable (50) étant configuré pour alimenter en énergie le module (40, 140, 240).

11. Système selon la revendication 10, le dispositif électronique portable (50) étant configuré pour commander le dispositif de cigarette électronique (10, 12, 14, 100) via le module (40, 140, 240).

12. Système selon l'une quelconque des revendications 10 à 11, le dispositif électronique portable (50) comprenant une interface homme-machine (51), le dispositif électronique portable (50) étant configuré pour transmettre un signal d'entrée au module (40, 140, 240) lors de la détection d'une entrée d'utilisateur sur l'interface homme-machine (51).

13. Procédé pour alimenter une partie de dispositif de cigarette électronique (10, 12, 14, 100), le procédé comprenant :
fournir un module (40, 140, 240) selon l'une quelconque des revendications 1 à 9,
fournir un dispositif électronique portable (50),
coupler le dispositif électronique portable (50) au deuxième élément de couplage (42),
alimenter en énergie le module (40, 140, 240) par le dispositif électronique portable (50), via le deuxième élément de couplage (42),
coupler la partie de dispositif de cigarette électronique (10, 12, 14, 100) au premier élément de couplage (41),
alimenter la partie de dispositif de cigarette électronique (10, 12, 14, 100) par l'élément d'alimentation en énergie (60), via le premier élément de couplage (41), communiquer avec le dispositif électronique portable (50) en utilisant l'unité de contrôleur (70) du module (40, 140, 240), et
contrôler le chargement d'une batterie (18) d'une partie de dispositif de cigarette électronique (10, 100) entre les bouffées et alimenter directement une partie de réservoir d'atomiseur/de liquide (14) de la partie de dispositif de cigarette électronique (10, 100) pendant une bouffée.

14. Procédé selon la revendication 13, le procédé comprenant en outre :
communiquer avec la partie de dispositif de cigarette électronique (10, 12, 14), via le module (40, 140, 240) en utilisant en outre une interface homme-machine (51) du dispositif électronique portable (50).
